# FASCICULE DE BREVET EUROPEEN

(11) **EP 0 424 229 B1**
(45) Date de publication et mention de la délivrance du brevet: **08.06.1994**
(21) Numéro de dépôt: 90402868.5
(22) Date de dépôt: 15.10.1990
(51) Int. Cl.: E01H 1/05, A47L 11/40, B60S 3/00

(54) **Engin et procédé utilisant cet engin pour nettoyer une surface**
Maschine und Verfahren unter Verwendung der Maschine zur Reinigung einer Oberfläche
Machine and method using the machine for cleaning a surface

(30) Priorité: 19.10.1989 FR 8913696
(43) Date de publication de la demande: 24.04.1991
(73) Titulaire: PROTEE, 75005 Paris (FR)
(72) Inventeur: Wallart, Jean-Pierre, F-31560 Nailloux (FR); Leroux, Philippe, F-31400 Toulouse (FR); Tate, Jean-Yves, F-73000 Chambéry (FR)
(74) Mandataire: Rinuy, Santarelli

(56) Documents cités:
- EP-A- 0 087 936
- DE-U- 8 806 413
- FR-A- 2 188 863
- FR-A- 2 297 286
- FR-A- 2 574 728

## Description

L'invention se rapporte à un engin pour nettoyer une surface présentant des obstacles.

EP-A-0.087.936 et FR-A-2.297.286 décrivent un engin dont les moyens pour déplacer un porte-outil de nettoyage par rapport au corps de l'engin permettent non seulement d'amener l'outil à une position préfixée, en fonction d'un ordre donné par le conducteur de l'engin, mais aussi d'assurer un ajustement passif de la largeur de travail de l'engin en fonction des obstacles, grâce à une certaine "élasticité" hydraulique ou pneumatique. EP-A-0.087.936 décrit en outre des moyens de liaison élastique entre une brosse (l'outil latéral) et un porte-brosse, prévus pour maintenir le brosse à l'angle de balayage approprié ; ainsi que des moyens de réaction réflexe à un obstacle, comportant notamment une barre sensitive.

L'invention vise à rendre plus aisé le pilotage de ces engins.

A cet effet, elle propose un engin pour nettoyer une surface présentant des obstacles, comportant un corps muni sur au moins un côté d'un outil latéral et, pour chaque outil latéral, des moyens pour déplacer par rapport au corps un porte-outil, ainsi que des moyens de liaison élastique entre le porte-outil et l'outil latéral, pour rendre l'outil latéral mobile élastiquement par rapport au porte-outil ; caractérisé en ce que lesdits moyens pour déplacer par rapport au corps un porte-outil ainsi que lesdits moyens de liaison élastique entre le porte-outil et l'outil latéral, font tous deux partie de moyens pour ajuster automatiquement la largeur de travail de l'engin en fonction des obstacles l'avoisinant éventuellement, de telle sorte qu'on peut le déplacer sur ladite surface selon une trajectoire comportant un minimum de changements de direction, lesdits moyens de liaison élastique entre le porte outil et l'outil latéral procurant un niveau passif d'ajustement automatique de la largeur de travail, lesdits moyens pour déplacer par rapport au corps un porte-outil procurant un niveau actif d'ajustement automatique de la largeur de travail.

Ainsi, à l'inverse des engins de nettoyage connus jusqu'ici, l'engin selon l'invention peut se déplacer selon une trajectoire comportant un minimum de changements de direction, et on peut par exemple suivre une paroi présentant des irrégularités sans avoir à faire suivre à l'engin une trajectoire ayant les mêmes irrégularités, c'est au contraire la largeur de travail de l'engin qui s'adaptera à ces irrégularités pendant qu'on déplace l'engin suivant une direction que l'on peut garder constante tant que l'amplitude des variations de la largeur de travail permet d'absorber les irrégularités.

L'invention offre notamment l'avantage de réduire la fatigue de l'opérateur s'il est à pilotage manuel, et dans le cas d'un engin se déplaçant de manière autonome, c'est-à-dire un robot de nettoyage, de moins solliciter le dispositif commandant son déplacement.

En outre, dans certaines configurations telle qu'une surface bordée par des parois se resserrant et s'écartant, l'engin selon l'invention permet de nettoyer la surface en une passe au lieu de deux passes beaucoup plus sinueuses ; et plus généralement, d'obtenir un meilleur rapport surface nettoyée/distance parcourue qu'avec les engins classiques.

Du fait qu'on dispose, pour ajuster la largeur de travail, de deux niveaux : un niveau d'ajustement passif procuré par les moyens élastiques, et un niveau d'ajustement actif fourni par les moyens pour déplacer le porte-outil, on peut réduire le nombre d'intervention des moyens pour déplacer le porte-outil, et en outre rattraper certaines imprécisions de positionnement.

Selon des caractéristiques préférées, lesdits moyens pour ajuster automatiquement la largeur de travail comportent en outre, pour chaque outil latéral :
- des moyens de détection pour détecter si l'outil est, par rapport au porte-outil, dans une position interne limite correspondant à un déplacement maximum autorisé vers le corps d'engin ;
- des moyens d'action, reliés aux moyens de détection, pour agir, quand est détectée ladite position interne limite, sur lesdits moyens pour déplacer par rapport au corps un porte-outil, afin de rapprocher le porte-outil du corps d'une distance préfixée.

Ainsi, lorsque l'emplacement des obstacles qui environnent l'engin fait que l'outil latéral se rapproche de l'engin jusqu'à sortir de la zone d'élasticité autorisée, on déplace cette zone d'élasticité afin qu'il puisse se déplacer passivement dans la nouvelle zone.

On peut se servir de ces caractéristiques pour ajuster directement la largeur de travail de l'engin ou bien, lorsque l'on a prévu d'autres moyens pour commander la largeur de travail de l'outil (voir ci-dessous), on peut les utiliser comme moyens de sécurité permettant d'éviter que l'outil latéral ne subisse des contraintes trop importantes.

Selon d'autres caractéristiques préférées, lesdits moyens pour ajuster automatiquement la largeur de travail comportent en outre, pour chaque outil latéral, des deuxièmes moyens de détection pour détecter si l'outil est par rapport au porte-outil dans une position externe limite correspondant à un déplacement maximum autorisé vers l'opposé du corps d'engin, lesdits moyens d'action étant également reliés auxdits deuxièmes moyens de détection, et agissant quand est détectée la position externe limite, sur les moyens pour déplacer le porte-outil afin de l'éloigner du corps d'une distance préfixée.

Lorsque l'engin présente également ces caractéristiques, on peut entièrement réaliser l'ajustement de la largeur de travail avec les moyens de détection et les moyens d'action.

Dans un mode de réalisation de l'engin, il comporte des moyens pour faire suivre automatiquement au corps d'engin sur ladite surface, une trajectoire de nettoyage prédéterminée en fonction de l'emplacement des obstacles et des possibilités de variations de la largeur de travail de l'engin, pour ne comporter qu'un minimum de changements de direction.

Selon des caractéristiques préférées de ce mode de réalisation, les moyens pour ajuster automatiquement la largeur de travail comportent en outre, des moyens de mémorisation pour enregistrer, pour chaque outil latéral, chaque position que doit adopter successivement le porte-outil par rapport au corps en fonction de la position du corps d'engin sur ladite trajectoire prédéterminée, et des moyens reliés auxdits moyens pour faire suivre la trajectoire au corps d'engin, auxdits moyens de mémorisation et auxdits moyens pour déplacer le porte-outil, pour que ces derniers amènent le porte-outil à la position qu'il doit adopter.

Avec ces caractéristiques, étant donné qu'on sait déjà quelle est la largeur de travail à donner à l'engin, on obtient un temps de réaction très rapide pour l'ajustement en largeur, de telle sorte que la vitesse de déplacement du corps d'engin peut être relativement importante.

Il est naturellement possible, en fonction des besoins, de combiner les caractéristiques qui viennent d'être exposées, aux moyens de détection et d'action exposés un peu plus haut, pour la sécurité de l'engin.

Selon des caractéristique préférées de l'engin selon l'invention, il comporte des moyens de sécurité comportant :
- pour chaque outil latéral, des moyens de détection de blocage, pour détecter si l'outil atteint par rapport au porte-outil une limite extrême de déplacement vers le corps d'engin ;
- des moyens de réaction réflexe, reliés aux moyens de détection de blocage, pour agir quand est détectée une dite limite extrême, d'une part sur des moyens pour arrêter le déplacement du corps d'engin par rapport à la surface à nettoyer, et d'autre part sur les moyens pour déplacer le porte-outil concerné, afin qu'ils le rétractent au maximum.

On évite ainsi que l'engin ne soit coincé par un obstacle imprévu, en risquant de détériorer l'outil latéral.

De préférence, lesdits moyens de réaction réflexe agissent en outre, après qu'ait été détectée une seule limite extrême, sur les moyens pour arrêter le déplacement du corps d'engin afin de réautoriser le déplacement du corps d'engin quand ladite limite extrême de déplacement n'est plus détectée, puis sur les moyens pour déplacer le porte-outil afin qu'il ressorte.

On rend ainsi l'engin capable de surmonter par lui-même une situation de coincement par un obstacle purement latéral.

Selon d'autres caractéristiques préférées, pour un engin comportant deux outils latéraux similaires, respectivement sur chaque côté du corps d'engin, ainsi que des moyens pour déplacer automatiquement le corps d'engin, lesdits moyens de réaction réflexe agissent, après qu'ait été détectée une limite extrême pour chaque outil latéral, sur les moyens pour déplacer automatiquement le corps d'engin afin de le faire pivoter.

Si les deux outils latéraux ont rencontré un obstacle, c'est que le robot se trouve face à un obstacle tel qu'un mur, il doit donc pivoter pour s'en dégager.

L'invention concerne également, sous un deuxième aspect, un procédé de nettoyage d'une surface présentant des obstacles, dans lequel on utilise un engin tel que précédemment exposé.

Ce procédé est avantageusement appliqué au nettoyage du sol d'un véhicule de transport en commun.

Selon des caractéristiques préférées du procédé, on fait suivre à l'engin une trajectoire longeant le véhicule sur un côté d'une extrémité à l'autre, puis longeant le côté opposé en sens inverse, ladite trajectoire comportant ensuite un tronçon central parcouru dans le même sens que le tronçon bordant le premier côté, l'engin utilisé comportant des moyens pour faire suivre automatiquement au corps d'engin ladite trajectoire, cet engin ayant une dimension en hauteur lui permettant de passer sous les sièges du véhicule tandis que l'amplitude des variations de sa largeur de travail lui permet de nettoyer le sol du véhicule en suivant ledit parcours.

Ce procédé offre l'avantage de permettre de nettoyer de façon particulièrement efficace le véhicule, et dans le cas où le véhicule est une voiture d'un train tel que le métropolitain parisien, il offre l'avantage de se terminer à l'extrémité opposée de la voiture par laquelle il a commencé, de telle sorte que l'opérateur qui déplace l'engin d'une voiture à l'autre doit simplement parcourir la distance correspondant au raccordement entre voitures, sans avoir à parcourir toute la longueur de la voiture.

L'exposé de l'invention sera maintenant poursuivi par la description d'exemples de réalisation, faite ci-après à titre illustratif et non limitatif en référence aux dessins annexés, sur lesquels :
- la figure 1 est une vue schématique en élévation d'un engin de nettoyage conforme à l'invention ;
- la figure 2 est une vue de dessus de cet engin ;
- la figure 3 illustre schématiquement le comportement de l'engin quand il se déplace le long d'une paroi présentant des irrégularités ;
- les figures 4 à 7 illustrent le comportement de l'engin quand il rencontre un obstacle latéral susceptible de le coincer par l'un des outils latéraux ;
- les figures 8 à 11 illustrent le comportement de l'engin quand il rencontre un obstacle le coinçant par les deux outils latéraux ;
- les figures 12 à 14 montrent par une vue de dessus prise au niveau du porte-outil, les moyens de liaison élastique reliant l'outil latéral 5A de l'engin à son porte-outil, respectivement en position externe limite, en position interne limite, et en position extrême de déplacement vers le corps d'engin ;
- la figure 15 représente l'outil latéral, en trait plein pour la position de la figure 12, en trait interrompu pour celle de la figure 13, et en trait mixte pour celle de la figure 14 ;
- la figure 16 est une coupe partielle en plan de l'engin, montrant les tiges de guidage du porte-outil, et la position qu'adopte l'outil quand il est rentré dans le corps d'engin ;
- la figure 17 est une coupe en plan du levier 9A des moyens de liaison élastique outil - porte-outil ;
- la figure 18 illustre de façon plus détaillée l'un des outils latéraux de l'engin, suivant une coupe prise suivant la ligne A-A de la figure 2 ;
- la figure 19 est la coupe indiquée en B-B sur la figure 18 ;
- la figure 20 est une vue de dessous de cet outil latéral ; et
- les figures 21 à 23 sont des coupes en plan de trois sortes de voiture du métropolitain parisien, montrant la trajectoire qu'y suit l'engin pour en nettoyer le sol.

L'engin de nettoyage 1 comporte un corps 2, un outil ventral 3 pour amener dans un bac 4 des déchets se trouvant sous le corps, et de chaque côté du corps 2, en avant de l'outil ventral 3, un outil latéral 5A et 5B présentant une forme oblongue, pour ramener vers l'outil ventral les déchets se trouvant sur les côtés du corps.

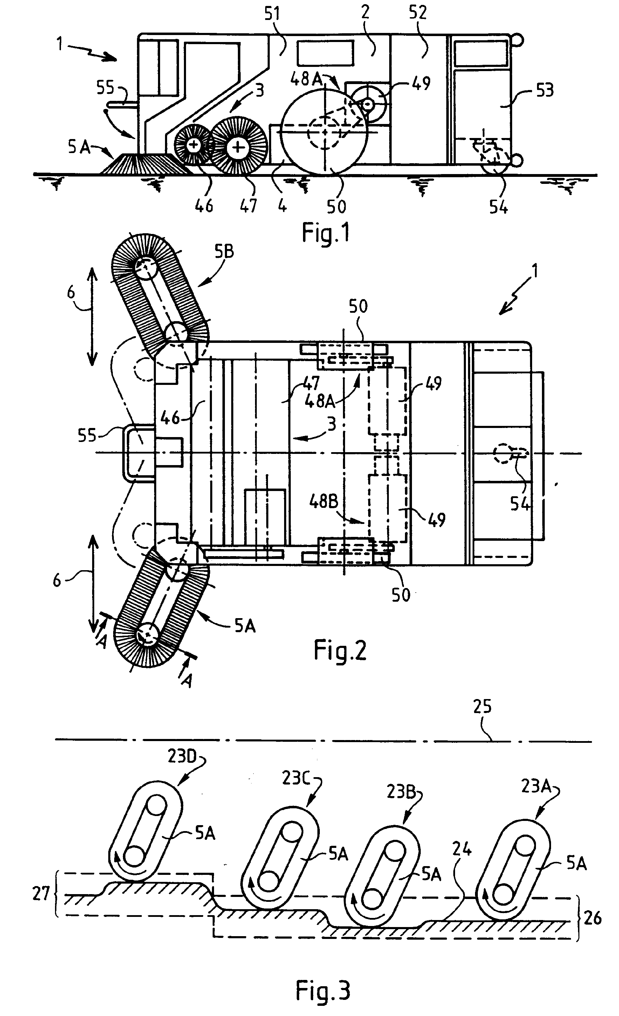

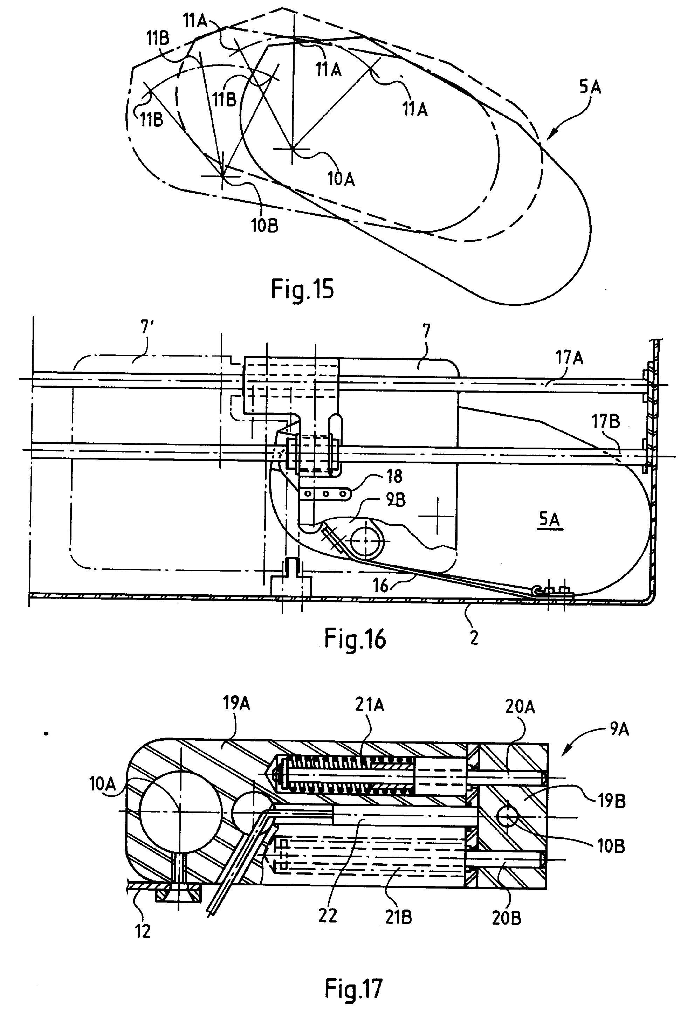

Les outils latéraux sont mobiles en translation suivant une direction transversale au corps 2, illustrée par les flèches doubles 6, entre la position sortie extrême représentée et une position rétractée extrême telle que celle montrée en trait mixte sur la figure 2, ou celle montrée sur la figure 16.

Ainsi, dans chaque position, ils gardent leur orientation en biais suivant des directions qui forment un V dont la pointe se situe dans le corps 2, de telle sorte qu'ils continuent à ramener les déchets vers l'outil ventral 3 quelle que soit la position qu'on leur a donnée pour faire varier la largeur de nettoyage de l'engin 1.

Conformément à l'invention, l'engin 1 comporte des moyens pour ajuster automatiquement sa largeur de travail en fonction des obstacles l'avoisinant éventuellement.

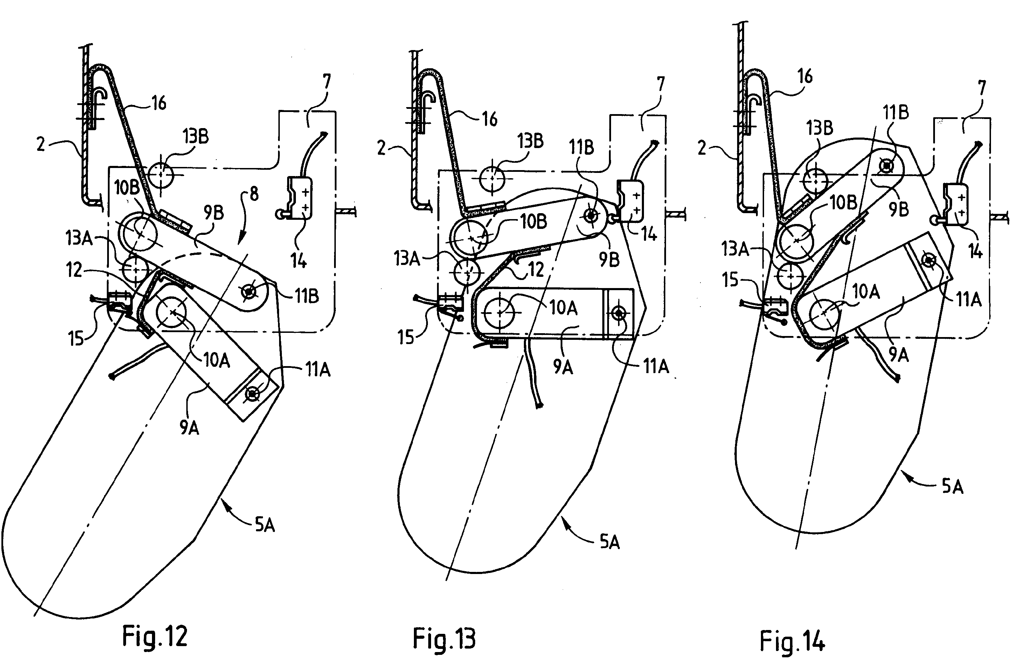

Comme on le voit sur les figures 12 à 14, ces moyens comportent, pour l'outil 5A, des moyens pour déplacer par rapport au corps 2 un porte outil 7, ainsi que des moyens de liaison élastique 8 entre le porte-outil 7 et l'outil latéral 5A, pour le rendre mobile élastiquement par rapport au porte-outil.

Les moyens de liaison élastique 8 comportent deux leviers 9A et 9B articulés chacun à une première extrémité sur le porte-outil 7, aux points respectifs 10A et 10B, et à une deuxième extrémité sur l'outil 5A, aux points respectifs 11A et 11B, les quatre points d'articulation 10A, 10B, 11A, 11B formant les sommets d'un quadrilatère déformable tel que lorsque l'on déplace l'outil par rapport au porte-outil, on modifie leur orientation angulaire relative en même temps qu'on les translate l'un par rapport à l'autre (voir figure 15).

On observera que les côtés du quadrilatère correspondant à un levier, c'est-à-dire les côtés situés entre les points 10A, 11A et 10B, 11B, ont une longueur similaire, tandis que les deux autres côtés opposés, c'est-à-dire les côtés situés entre les points 10A, 10B et 11A, 11B ont une longueur différente, la longueur du côté 11A, 11B étant supérieure à celle du côté 10A, 10B.

Un lien élastique 12 est disposé entre les leviers 9A et 9B, afin que l'outil soit spontanément disposé en biais par rapport au corps d'engin, tandis que deux butées 13A et 13B sont prévues sur le support 7 pour limiter de chaque côté les déplacements de l'outil 5A par rapport au porte-outil 7.

Un détecteur de contact électrique 14 est prévu sur le porte-outil 7 pour permettre de détecter si l'outil est, par rapport au porte-outil, dans la position limite interne illustrée sur la figure 13, tandis qu'un autre contacteur électrique 15 est prévu pour détecter la position limite externe illustrée sur la figure 12.

La position illustrée sur la figure 14 est la position la plus transversale possible que peut adopter l'outil 5A, qui lui permet de se rétracter dans le corps de l'engin 2, un lien souple non extensible 16 étant disposé entre le corps 2 et le levier 9B pour faire adopter automatiquement à l'outil 5A cette disposition dans la position rétractée extrême qu'illustre la figure 16, ce qui offre par rapport à la variante montrée sur la figure 2, l'avantage de permettre le loger entièrement l'outil 5A dans le corps 2 en position rétractée, alors qu'est minimisé le volume nécessaire à cette rétractation.

Les deux outils latéraux 5A et 5B sont similaires, le porte-outil 7′ est similaire au porte-outil 7 et coopère avec l'outil 5B par des moyens de liaison élastique similaires aux moyens 8, et plus généralement l'engin 1 comporte de chaque côté des moyens similaires pour l'outil 5A et pour l'outil 5B.

Les porte-outils 7 et 7′ sont guidés en translation par des barres 17A et 17B transversales au corps 2 sur lesquels elles sont disposées tête-bêche, ce qui offre l'avantage de minimiser l'encombrement et d'économiser les moyens nécessaires pour guider les outils 5A et 5B en translation.

Les moyens pour déplacer les porte-outils par rapport au corps 2 (non représentés) sont disposés au-dessus des porte-outils et sont reliés à ceux-ci par un bras vertical 18 (voir figure 16).

Ainsi qu'on le voit sur la figure 17, le levier 9A comporte deux demi-leviers 19A et 19B adaptés à coulisser l'un par rapport à l'autre grâce à des tiges 20A et 20B, le demi-levier 19A étant articulé sur le porte-outil, tandis que le demi-levier 19B est articulé sur l'outil 5A. Des ressorts 21A et 21B sont prévus autour des tiges 20A et 20B afin d'appliquer élastiquement les deux demi-leviers 19A et 19B l'un contre l'autre, un détecteur de proximité 22 étant logé dans le demi-levier 19A pour détecter un écartement entre les deux demi-leviers, en détectant si son extrémité est en contact ou non avec le demi-levier 19B.

Le détecteur de proximité 22 sert à détecter si l'outil a atteint par rapport au porte-outil une limite extrême de déplacement vers le corps d'engin : comme on le voit sur la figure 14, si l'on fait pivoter l'outil 5A dans le sens inverse des aiguilles d'une montre, alors que le levier 9B est en contact avec la butée 13B, le déplacement qui se produira provoquera un écartement entre les demi-leviers 19A et 19B, que détectera le détecteur de proximité 22.

Sur la figure 3, on a illustré les positions successives 23A, 23B, 23C et 23D qu'occupe l'outil 5A quand l'engin 1 se déplace le long de la paroi 24, ainsi que sa direction de déplacement 25, l'engin se déplaçant de la droite vers la gauche de la figure.

Dans les positions 23A, 23B et 23C, l'outil est resté dans la zone d'élasticité 26 sans que soit atteinte sa limite intérieure autorisée, correspondant à la position montrée sur la figure 13.

Entre les positions 23C et 23D, cette position a été atteinte, et les moyens d'action reliés au détecteur 14 que comporte l'engin, ont agi sur les moyens pour déplacer le porte-outil afin de la rapprocher du corps d'un incrément, c'est-à-dire d'une certaine distance préfixée, de telle sorte que la zone d'élasticité s'est déplacée pour devenir la zone 27.

A l'inverse, si la paroi s'était écartée du corps de l'outil au lieu de s'en rapprocher, on serait arrivé dans la position illustrée sur la figure 12 dans laquelle le bras 9A actionne le détecteur de contact 15, auquel sont reliés ces moyens d'action, qui auraient agi sur les moyens pour déplacer le porte-outil afin de l'éloigner du corps de ce même incrément.

On notera que malgré les irrégularités de la paroi 24, la direction de déplacement 25 est rectiligne.

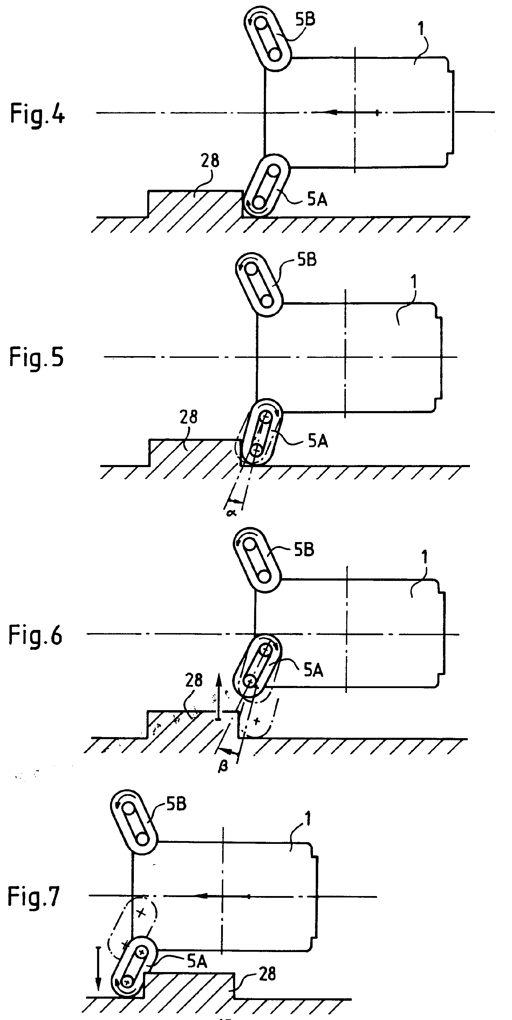

L'engin est également muni de moyens de sécurité dont le fonctionnement va maintenant être expliqué à l'appui des figures 4 à 11.

Lorsque l'engin 1 arrive sur l'obstacle 28, comme le montre la figure 4, l'outil 5A pivote d'un angle α qui le fait parvenir jusqu'à la limite extrême de déplacement que détecte le capteur 22, qui est relié à des moyens de réaction réflexe qui agissent à la suite de cette détection, d'une part sur des moyens pour arrêter le déplacement du corps d'engin par rapport à la surface à nettoyer, et d'autre part sur les moyens pour déplacer le porte-outil 5A afin qu'ils le rétractent au maximum, comme le montre la figure 6.

Les moyens de réaction réflexe agissent en outre, après qu'ait été détectée la limite extrême pour le bras 5A, sur les moyens pour arrêter le déplacement du corps d'engin afin de réautoriser son déplacement quand la limite extrême n'est plus détectée, c'est-à-dire quand l'outil 5A, après avoir été dégagé de l'obstacle 28, a pu pivoter en sens inverse d'un angle β (figure 6) puis au bout d'un certain laps de temps permettant de franchir l'obstacle 28 les moyens de réaction réflexe agissent sur les moyens pour déplacer le porte-outil afin qu'il ressorte, et on se retrouve dans la position illustrée sur la figure 7.

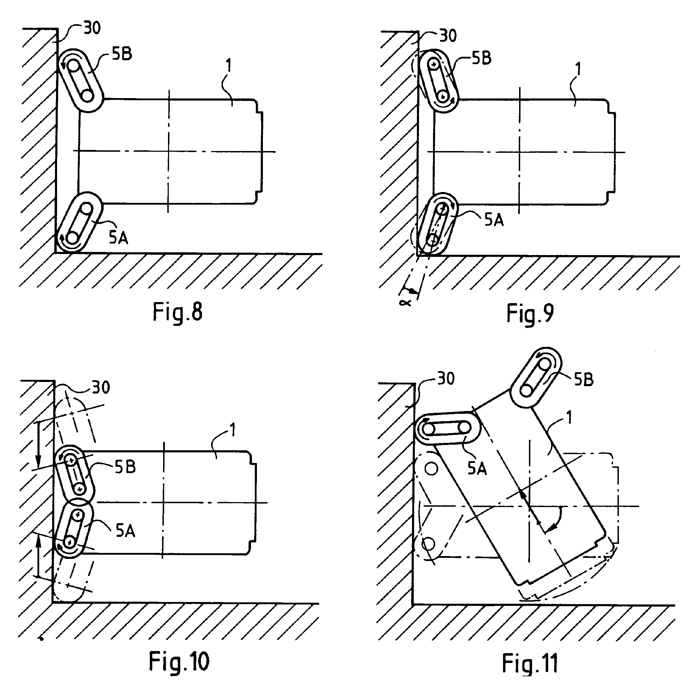

Les moyens de réaction réflexe sont également prévus pour le cas montré sur la figure 8, dans lequel les deux outils 5A et 5B rencontrent simultanément un obstacle tel que la paroi 30, et pivotent tous deux jusqu'à la limite extrême de déplacement (figure 9). Dans ce cas, après avoir arrêté l'engin et rétracté au maximum les outils 5A et 5B, ils agissent sur les moyens pour déplacer le corps d'engin pour le faire pivoter, comme le montre la figure 11.

L'engin comporte en outre, des moyens pour faire suivre automatiquement au corps 2 sur la surface à nettoyer, une trajectoire de nettoyage prédéterminée en fonction de l'emplacement des obstacles et des possibilités de variation de sa largeur de travail, pour ne comporter qu'un minimum de changements de direction, les moyens pour ajuster automatiquement la largeur de travail comportant en outre des moyens de mémorisation pour enregistrer, pour chaque outil latéral 5A et 5B, chaque position que doit adopter susccessivement le porte-outil par rapport au corps en fonction de la position de l'engin sur la trajectoire prédéterminée, ainsi que des moyens reliés aux moyens pour faire suivre la trajectoire au corps d'engin, aux moyens de mémorisation et aux moyens pour déplacer le corps d'outil, pour que ces derniers amènent le porte-outil à la position qu'il doit adopter.

Dans ces conditions, dans un but de simplification, il est possible de supprimer le capteur 15 et les moyens d'action correspondants, tandis que le capteur 14 offre simplement une certaine sécurité évitant que l'outil 5A ne supporte des contraintes trop importantes : c'est essentiellement en fonction des données enregistrées que seront déplacés les porte-outils, mais si à la suite d'imprécisions dans le suivi de la trajectoire l'outil est trop éloigné du corps 2, on le rentre automatiquement d'une quantité appropriée.

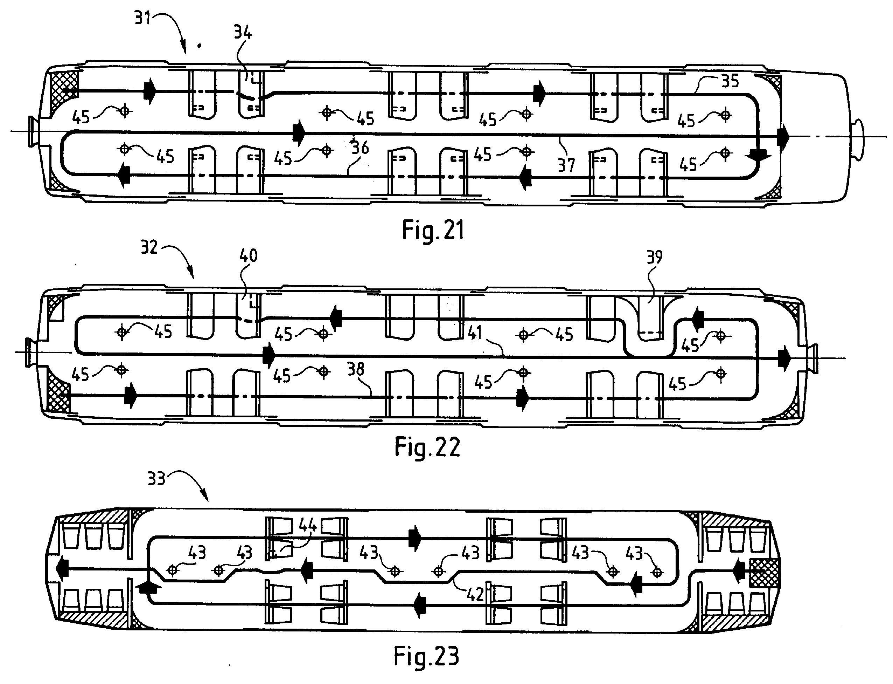

Les figures 21 à 23 montrent chacune une voiture d'une rame du métropolitain parisien, les figures 21 et 22 montrant deux voitures faisant partie d'une même rame, la voiture 31 montrée sur la figure 21 étant disposée à l'une des extrémités de cette rame, tandis que la voiture 32 montrée sur la figure 22 est disposée dans une position intermédiaire de la rame.

Chacune des voitures 31 et 32 comporte trois rangées de deux paires de sièges disposés transversalement, tandis que la voiture 33 montrée sur la figure 23, qui est une voiture intermédiaire, comporte deux rangées de deux paires de sièges transversaux tandis qu'à chaque extrémité de la voiture sont disposés longitudinalement d'autres sièges.

Dans chacun des trois exemples illustrés, on fait suivre à l'engin une trajectoire longeant le véhicule sur un côté d'une extrémité à l'autre, puis longeant le côté opposé en sens inverse, la trajectoire comportant ensuite un tronçon central parcouru dans le même sens que le tronçon bordant le premier côté.

Dans le cas de la voiture 31, on a commencé par longer le véhicule en bordant la paroi située sur le haut du dessin en suivant une trajectoire pratiquement rectiligne, on a simplement fait un détour pour éviter un obstacle important situé sous le siège 34. Après ce premier tronçon 35 sensiblement rectiligne, l'engin a fait demi-tour pour longer en sens inverse le côté opposé de la voiture 31, et là il a pu suivre une trajectoire rectiligne, et à la fin de ce tronçon rectiligne 36, il a fait demi-tour pour circuler au centre de la voiture en suivant un tronçon rectiligne 37.

Dans le cas de la voiture 32, le premier tronçon 38 est rectiligne, et longe le côté se trouvant sur le bas de la figure, la trajectoire présente ensuite un demi-tour puis commence à longer le côté opposé de la voiture mais un obstacle extrêmement important se trouvant sous le siège 39, la trajectoire évite ce siège puis se poursuit en étant pratiquement rectiligne, à l'exception d'un petit détour pour éviter l'obstacle situé sous le siège 40 puis la trajectoire se termine par le tronçon central rectiligne 41.

Pour ce qui est de la voiture 33, l'on est parti en position centrale de l'une des extrémités compte tenu de la dispositions des sièges aux extrémités, puis l'on a suivi de chaque côté un tronçon rectiligne tandis que dans le tronçon central 42 on a dû faire des détours pour éviter les barres 43 ainsi qu'un obstacle situé sous le siège 44, avant de terminer à l'autre extémité entre les sièges qui s'y trouvent.

On observera que ces trajectoires, qui ont été suivies automatiquement par l'engin, offrent l'avantage de se commencer et de se terminer à des extrémités opposées de la voiture, de telle sorte que l'opérateur qui doit déplacer l'engin d'une voiture à l'autre doit simplement franchir le raccordement entre les voitures, il n'a pas à parcourir avec l'engin toute la longueur d'une voiture.

On notera que l'engin 1 a pu passer sous les sièges des véhicules 31 à 33 étant donné qu'il a une dimension en hauteur particulièrement réduite, et que l'amplitude des variations de sa largeur de travail lui permet d'éviter la majorité des obstacles, et notamment les barres 45 des véhicules 31 et 32.

Plus généralement, l'engin 1 est particulièrement compact, à titre d'exemple on pourra noter que sa hauteur est de 25 cm, la largeur du corps de 40 cm tandis que la largeur maximale de nettoyage est de 82,5 cm tandis que la longueur de l'engin est de 70 cm.

L'outil ventral 3 est formé par des brosses cylindriques 46 et 47, la brosse 47 réalisant un brossage longitudinal de la surface à nettoyer ; le corps 2 est mobile grâce à deux groupes motopropulseurs 48A et 48B disposés sur les côtés respectifs du corps, comportant chacun un moteur 49 et une roue 50 ; un ensemble d'aspiration est prévu dans le compartiment 51, un ensemble électronique est disposé dans le compartiment 52 et des batteries dans le compartiment 53, en-dessous duquel se trouve une roue folle 54, tandis qu'une poignée 55 est prévue à l'avant de l'engin.

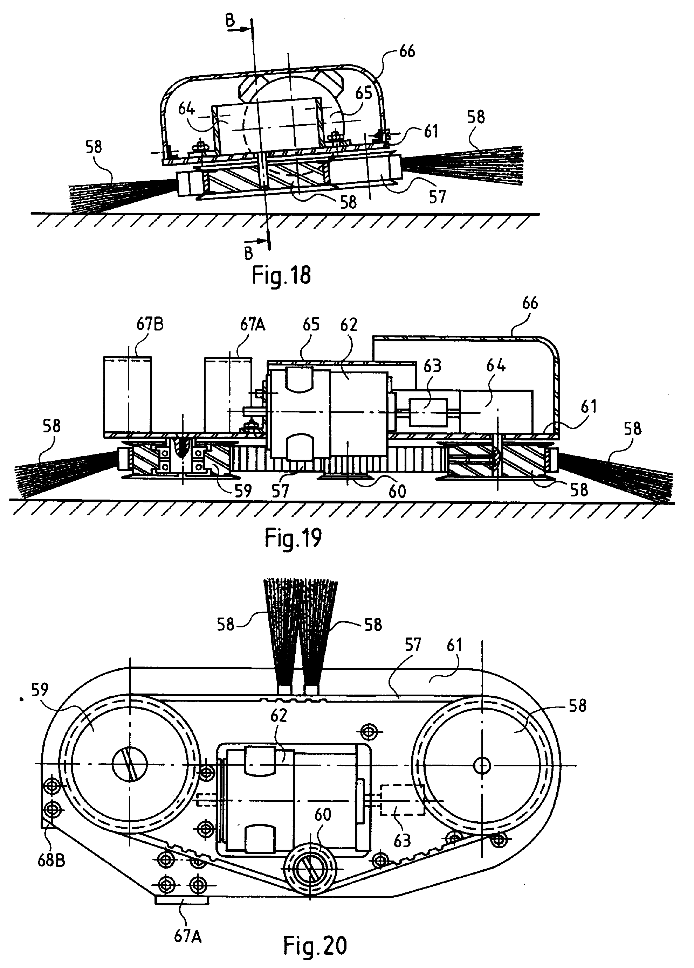

L'outil latéral 5A, auquel est similaire l'outil 5B, est monté en détail sur les figures 18 à 20.

Il forme un ensemble de brossage oblong comportant comme brosse une courroie 57 munie de poils 58 sur son profil extérieur tandis que son profil intérieur est adapté à coopérer avec des poulies rotatives 58 à 60, lesdits poils étant implantés de manière oblique sur la courroie.

Les poulies 58 à 60 sont montées sur un support oblong 61 sur lequel est également installé un moteur 62 pour entraîner la poulie 58, ce moteur étant relié à la poulie 58 par un joint de Oldham 63 et un réducteur 64, un capot 65 étant prévu au-dessus du moteur tandis qu'un capot 66 est prévu au-dessus du joint de Oldham et du réducteur. Des pivots 67A et 67B sont prévus sur le support, pour le montage respectivement du levier 9A et du levier 9B.

On notera qu'un tel ensemble de brossage ainsi que sa brosse font l'objet d'une demande de brevet séparé déposée conjointement à la présente demande.

Bien entendu l'invention ne se limite pas aux exemples de réalisation décrits et représentés sur les figures, mais englobe au contraire toutes les variantes que l'homme du métier pourra déterminer, et qui sont décrites dans les revendications.

## Revendications

1. Engin pour nettoyer une surface présentant des obstacles, comportant un corps (2) muni sur au moins un côté d'un outil latéral (5A, 5B) et, pour chaque outil latéral (5A, 5B), des moyens pour déplacer par rapport au corps un porte-outil (7, 7′), ainsi que des moyens de liaison élastique entre le porte-outil (7, 7′) et l'outil latéral (5A, 5B), pour rendre l'outil latéral (5A, 5B) mobile élastiquement par rapport au porte-outil (7, 7′) ; caractérisé en ce que lesdits moyens pour déplacer par rapport au corps (2) un porte-outil (7, 7′) ainsi que lesdits moyens de liaison élastique (9A, 9B, 12) entre le porte-outil et l'outil latéral (5A, 5B), font tous deux partie de moyens pour ajuster automatiquement la largeur de travail de l'engin en fonction des obstacles (24, 25) l'avoisinant éventuellement, de telle sorte qu'on peut le déplacer sur ladite surface selon une trajectoire (25 ; 35, 36, 37) comportant un minimum de changements de direction, lesdits moyens de liaison élastique entre le porte outil et l'outil latéral procurant un niveau passif d'ajustement automatique de la largeur de travail, lesdits moyens pour déplacer par rapport au corps un porte-outil procurant un niveau actif d'ajustement automatique de la largeur de travail.

2. Engin selon la revendication 1, caractérisé en ce que lesdits moyens pour ajuster automatiquement la largeur de travail comportent en outre, pour chaque outil latéral :
- des moyens de détection (14) pour détecter si l'outil est, par rapport au porte-outil, dans une position interne limite correspondant à un déplacement maximum autorisé vers le corps d'engin ;
- des moyens d'action, reliés aux moyens de détection (14), pour agir, quand est détectée ladite position interne limite, sur lesdits moyens pour déplacer par rapport au corps un porte-outil, afin de rapprocher le porte-outil du corps d'une distance préfixée.

3. Engin selon la revendication 2, caractérisé en ce que lesdits moyens pour ajuster automatiquement la largeur de travail comportent en outre, pour chaque outil latéral, des deuxièmes moyens de détection (15) pour détecter si l'outil est par rapport au porte-outil dans une position externe limite correspondant à un déplacement maximum autorisé vers l'opposé du corps d'engin, lesdits moyens d'action étant également reliés auxdits deuxièmes moyens de détection (15), et agissant quand est détectée la position externe limite, sur les moyens pour déplacer le porte-outil afin de l'éloigner du corps d'une distance préfixée.

4. Engin selon l'une quelconque des revendications 1 à 3, caractérisé en ce qu'il comporte des moyens pour faire suivre automatiquement au corps d'engin sur ladite surface, une trajectoire de nettoyage (35, 36, 37) prédéterminée en fonction de l'emplacement des obstacles (45) et des possibilités de variations de la largeur de travail de l'engin, pour ne comporter qu'un minimum de changements de direction.

5. Engin selon la revendication 4, caractérisé en ce que les moyens pour ajuster automatiquement la largeur de travail comportent en outre, des moyens de mémorisation pour enregistrer, pour chaque outil latéral, chaque position que doit adopter successivement le porte-outil par rapport au corps (2) en fonction de la position du corps d'engin sur ladite trajectoire prédéterminée, et des moyens reliés auxdits moyens pour faire suivre la trajectoire au corps d'engin, auxdits moyens de mémorisation et auxdits moyens pour déplacer le porte-outil, pour que ces derniers amènent le porte-outil à la position qu'il doit adopter.

6. Engin selon l'une quelconque des revendications 1 à 5, caractérisé en ce qu'il comporte des moyens de sécurité comportant :
- pour chaque outil latéral, des moyens de détection de blocage (22), pour détecter si l'outil atteint par rapport au porte-outil une limite extrême de déplacement vers le corps d'engin ;
- des moyens de réaction réflexe, reliés à chacun des moyens de détection de blocage, pour agir quand est détectée une dite limite extrême, d'une part sur des moyens pour arrêter le déplacement du corps d'engin par rapport à la surface à nettoyer, et d'autre part sur les moyens pour déplacer le porte-outil concerné, afin qu'ils le rétractent au maximum.

7. Engin selon la revendication 6, caractérisé en ce que lesdits moyens de réaction réflexe agissent en outre, après qu'ait été détectée une seule limite extrême, sur les moyens pour arrêter le déplacement du corps d'engin afin de réautoriser le déplacement du corps d'engin quand ladite limite extrême de déplacement n'est plus détectée, puis sur les moyens pour déplacer le porte-outil afin qu'il ressorte.

8. Engin selon l'une quelconque des revendications 6 ou 7, caractérisé en ce qu'il comporte deux outils latéraux similaires (5A, 5B), respectivement sur chaque côté du corps d'engin, ainsi que des moyens pour déplacer automatiquement le corps d'engin (2), et en ce que lesdits moyens de réaction réflexe agissent, après qu'ait été détectée une limite extrême pour chaque outil latéral, sur les moyens pour déplacer automatiquement le corps d'engin afin de le faire pivoter.

9. Engin selon l'une quelconque des revendications 1 à 8, caractérisé en ce que lesdits moyens de liaison élastique entre le porte-outil et l'outil latéral comportent deux leviers (9A, 9B) articulés chacun à une première extrémité (10A, 10B) sur le porte-outil et à une deuxième extrémité (11A, 11B) sur l'outil latéral, les quatre points d'articulation (10A, 10B, 11A, 11B) formant les sommets d'un quadrilatère déformable tel que lorsqu'on déplace l'outil par rapport au porte-outil, on modifie leur orientation angulaire relative en même temps qu'on les translate l'un par rapport à l'autre.

10. Engin selon la revendication 9, caractérisé en ce que ledit quadrilatère comporte deux côtés opposés ayant une longueur similaire, et deux côté opposés ayant une longueur différente.

11. Engin selon l'une quelconque des revendications 9 ou 10, caractérisé en ce qu'un lien élastique (12) est disposé entre lesdits leviers, tandis que deux butées (13A, 13B) sont prévues pour limiter de chaque côté les déplacements de l'outil par rapport au porte-outil.

12. Engin selon l'une quelconque des revendications 9 à 11, caractérisé en ce qu'il comporte au moins un détecteur de contact actionné par un desdits leviers, destiné à détecter si l'outil atteint par rapport au porte-outil une limite correspondant à un déplacement maximum autorisé.

13. Engin selon l'une quelconque des revendications 9 à 12, caractérisé en ce que l'un desdits leviers (9A) comporte deux demi-leviers (19A, 19B) adaptés à coulisser l'un par rapport à l'autre, articulés respectivement sur le porte-outil (7) et sur l'outil (5A, 5B), des moyens (21A, 21B) pour appliquer élastiquement les deux demi-leviers l'un contre l'autre, et des moyens (22) pour détecter un écartement entre les deux demi-leviers, destinés à détecter si l'outil atteint par rapport au porte-outil une limite extrême de déplacement vers le corps d'engin.

14. Engin selon l'une quelconque des revendications 1 à 13, caractérisé en ce qu'il comporte un outil ventral (3) pour amener dans un bac (4) des déchets se trouvant sous le corps d'engin, chaque outil latéral étant disposé en avant de l'outil ventral et présentant une forme oblongue, lesdits moyens de liaison élastique (9A, 9B, 12) étant adaptés à ce que ledit outil soit spontanément disposé en biais par rapport au corps d'engin, chaque porte-outil étant mobile en translation suivant une direction (6) transversale au corps d'engin.

15. Engin selon l'une quelconque des revendications 1 à 14, caractérisé en ce qu'il comporte deux outils latéraux similaires (5A, 5B), respectivement sur chaque côté du corps d'engin, et en ce que les deux porte-outils (7, 7′) sont guidés en translation sur des barres (17A, 17B) transversales au corps d'engin sur lesquelles ils sont disposés tête-bêche.

16. Engin selon la revendication 15, caractérisé en ce que lesdits moyens de liaison élastique entre le porte-outil et l'outil latéral comportent deux leviers (9A, 9B) articulés chacun à une première extrémité (10A, 10B) sur le porte-outil (7) et à une deuxième extrémité (11A, 11B) sur l'outil latéral, et en ce que pour chaque outil latéral, un lien souple non extensible (16) est disposé entre le corps d'engin (2) et l'un desdits leviers (9B), afin de faire adopter à l'outil latéral une position aussi transversale que possible par rapport au corps d'engin, afin de minimiser le volume nécessaire à la rétraction de l'outil dans le corps d'engin.

17. Engin selon l'une quelconque des revendications 1 à 16, caractérisé en ce que chaque outil latéral forme un ensemble de brossage oblong comportant comme brosse une courroie (57) munie de poils (58) sur son profil extérieur tandis que son profil intérieur est adapté à coopérer avec des poulies rotatives (58, 59, 60), lesdits poils étant implantés de manière oblique sur la courroie.

18. Engin selon la revendication 17, caractérisé en ce que ledit ensemble de brossage comporte un support oblong (61) sur lequel sont montées lesdites poulies, ainsi qu'un moteur (62) pour entraîner une des poulies, ledit moteur étant relié à la poulie entraînée (58) par un joint de Oldham (63) et un réducteur (64).

19. Procédé de nettoyage d'une surface présentant des obstacles, caractérisé en ce qu'on utilise un engin de nettoyage selon l'une quelconque des revendications 1 à 18, en le déplaçant sur ladite surface suivant une trajectoire (35, 36, 37) comportant un minimum de changements de directions.

20. Procédé selon la revendication 19, caractérisé en ce que ladite surface qu'on nettoie est le sol d'un véhicule de transport en commun (31, 32, 33)

21. Procédé selon la revendication 20, caractérisé en ce qu'on fait suivre audit engin une trajectoire longeant le véhicule, sur un côté d'une extrémité à l'autre, puis longeant le côté opposé en sens inverse, ladite trajectoire comportant ensuite un tronçon central (37, 41, 42) parcouru dans le même sens que le tronçon (35) bordant le premier côté, l'engin utilisé comportant des moyens pour faire suivre automatiquement au corps d'engin ladite trajectoire, cet engin ayant une dimension en hauteur lui permettant de passer sous les sièges du véhicule tandis que l'amplitude des variations de sa largeur de travail lui permet de nettoyer le sol du véhicule en suivant ledit parcours.

## Patentansprüche

1. Maschine zum Reinigen einer Hindernisse aufweisenden Fläche, die einen Körper (2), der auf wenigstens einer Seite mit einem Seitenwerkzeug (5A, 5B) ausgerüstet ist, und für jedes Seitenwerkzeug (5A, 5B) Einrichtungen zur Bewegung eines Werkzeughalters (7, 7′) bezüglich des Körpers sowie Einrichtungen zur elastischen Verbindung zwischen dem Werkzeugträger (7, 7′) und dem Seitenwerkzeug (5A, 5B) besitzt, um das Seitenwerkzeug (5A, 5B) bezüglich des Werkzeugträgers (7, 7′) elastisch beweglich zu machen, dadurch gekennzeichnet, daß die Einrichtungen zur Bewegung eines Werkzeughalters (7, 7′) bezüglich des Körpers (2) sowie die elastischen Verbindungseinrichtungen (9A, 9B, 12) zwischen dem Werkzeugträger und dem Seitenwerkzeug (5A, 5B) beide Teil von Einrichtungen zur automatischen Einstellung der Arbeitsbreite der Maschine in Abhängigkeit von den gegebenenfalls in Nähe der Maschine befindlichen Hindernissen (24, 25) bilden, so daß man es auf dieser Fläche auf einer Bewegungsbahn (25; 35, 36, 37) bewegen kann, die ein Minimum an Richtungsänderungen besitzt, wobei die elastischen Verbindungseinrichtungen zwischen dem Werkzeugträger und dem Seitenwerkzeug eine passive Stufe zur automatischen Einstellung der Arbeitsbreite bilden, während die Einrichtungen zur Bewegung eines Werkzeugträgers bezüglich des Körpers eine aktive Stufe zur automatischen Einstellung der Arbeitsbreite bilden.

2. Maschine nach Anspruch 1, dadurch gekennzeichnet, daß die Einrichtungen zur automatischen Einstellung der Arbeitsbreite außerdem für jedes Seitenwerkzeug umfassen:
- Tasteinrichtungen (14) zum Feststellen, ob das Werkzeug sich bezüglich des Werkzeugträgers in einer inneren Grenzstellung befindet, die einer maximal zugelassenen Bewegung auf den Maschinenkörper zu entspricht;
- Wirkeinrichtungen, die mit den Tasteinrichtungen (14) verbunden sind, um, wenn diese innere Grenzstellung festgestellt wird, auf diese Einrichtungen zur Bewegung eines Werkzeugträgers bezüglich des Körpers einzuwirken, damit der Werkzeugträger dem Körper um eine vorfestgelegte Strecke angenähert wird.

3. Maschine nach Anspruch 2, dadurch gekennzeichnet, daß die Einrichtungen zur automatischen Einstellung der Arbeitsbreite außerdem für jedes Seitenwerkzeug zwei der Tasteinrichtungen (15) besitzt, um festzustellen, ob sich das Werkzeug bezüglich des Werkzeugträgers in einer äußeren Grenzstellung befindet, die einer maximal zugelassenen Bewegung auf die dem Maschinenkörper entgegengesetzte Seite zu entspricht, wobei die Wirkeinrichtungen ebenfalls mit diesen zweiten Tasteinrichtungen (15) verbunden sind, und, wenn die äußere Grenzstellung festgestellt wird, auf die Einrichtungen zur Bewegung des Werkzeugträgers einzuwirken, damit er von dem Körper um eine vorfestgelegte Strecke entfernt wird.

4. Maschine nach einem der Ansprüche 1 bis 3, dadurch gekennzeichnet, daß sie Einrichtungen besitzt, um den Maschinenkörper automatisch auf der Fläche einer Reinigungsbahn (35, 36, 37) folgen zu lassen, die in Abhängigkeit vom Standort der Hindernisse (45) und den Änderungsmöglichkeiten der Arbeitsbreite der Maschine vorbestimmt ist, um nur ein Minimum an Richtungsänderungen zu besitzen.

5. Maschine nach Anspruch 4, dadurch gekennzeichnet, daß die Einrichtungen zur automatischen Einstellung der Arbeitsbreite außerdem Speichereinrichtungen, die für jedes Seitenwerkzeug jede Stellung speichern, die der Werkzeugträger bezüglich des Körpers (2) in Abhängigkeit von der Stellung des Maschinenkörpers auf der vorbestimmten Bahn nacheinander einnehmen muß, und mit diesen Einrichtungen verbundene Einrichtungen besitzt, um den Maschinenkörper, die Speichereinrichtungen und die Einrichtungen zur Bewegung des Werkzeugträgers dieser Bahn folgen zu lassen, damit letztere den Werkzeugträger in die Stellung bringen, die er einnehmen muß.

6. Maschine nach einem der Ansprüche 1 bis 5, dadurch gekennzeichnet, daß sie Sicherheitseinrichtungen besitzt, umfassend:
- für jedes Seitenwerkzeug Blockierungstasteinrichtungen (22) zum Feststellen, ob das Werkzeug bezüglich des Werkzeugträgers eine äußerste Bewegungsgrenze auf den Maschinenkörper zu erreicht,
- Reflexreaktionseinrichtungen, die mit jeder der Blockierungstasteinrichtungen verbunden sind und, wenn diese äußerste Grenze festgestellt wird, einerseits auf Einrichtungen zum Unterbrechen der Bewegung des Maschinenkörpers bezüglich der zu reinigenden Fläche und andererseits auf die Einrichtungen zur Bewegung des betreffenden Werkzeugträgers einwirken, damit sie diesen maximal einziehen.

7. Maschine nach Anspruch 6, dadurch gekennzeichnet, daß die Reflexreaktionseinrichtungen außerdem, nachdem eine einzige äußerste Grenze festgestellt wurde, auf die Einrichtungen zum Unterbrechen der Bewegung des Maschinenkörpers einwirken, um die Bewegung des Maschinenkörpers wieder zuzulassen, wenn diese äußerste Bewegungsgrenze nicht mehr festgestellt wird, und dann auf die Einrichtungen zur Bewegung des Werkzeugträgers einwirken, damit er wieder ausgefahren wird.

8. Maschine nach einem der Ansprüche 6 oder 7, dadurch gekennzeichnet, daß sie zwei gleichartige Seitenwerkzeuge (5A, 5B) jeweilig auf jeder Seite des Maschinenkörpers sowie Einrichtungen zur automatischen Bewegung des Maschinenkörpers (2) besitzt und daß die Reflexreaktionseinrichtungen, nachdem eine äußerste Grenze für jedes Seitenwerkzeug festgestellt wurde, auf die Einrichtungen zur automatischen Bewegung des Maschinenkörpers einwirken, um ihn zu verschwenken.

9. Maschine nach einem der Ansprüche 1 bis 8, dadurch gekennzeichnet, daß die elastischen Verbindungseinrichtungen zwischen dem Werkzeugträger und dem Seitenwerkzeug zwei Hebel (9A, 9B) umfassen, die jeweils an einem ersten Ende (10A, 10B) am Werkzeugträger und an einem zweiten Ende (11A, 11B) am Seitenwerkzeug angelenkt sind, wobei die vier Anlenkungspunkte (10A, 10B, 11A, 11B) die Ecken eines verformbaren Vierecks bilden, so daß man, wenn man das Werkzeug bezüglich des Werkzeugträgers bewegt, ihre relative Winkelausrichtung verändert und gleichzeitig sie in bezug aufeinander verschiebt.

10. Maschine nach Anspruch 9, dadurch gekennzeichnet, daß das Viereck zwei einander entgegengesetzte Seiten mit gleicher Länge und zwei einander entgegengesetzte Seiten mit verschiedener Länge besitzt.

11. Maschine nach einem der Ansprüche 9 oder 10, dadurch gekennzeichnet, daß zwischen den Hebeln ein elastisches Verbindungsorgan (12) angeordnet ist, während zwei Anschläge (13A, 13B) vorgesehen sind, um auf jeder Seite die Bewegungen des Werkzeugs bezüglich des Werkzeugträgers zu begrenzen.

12. Maschine nach einem der Ansprüche 9 bis 11, dadurch gekennzeichnet, daß sie wenigstens einen durch einen der Hebel betätigten Berührungsfühler besitzt, der dazu bestimmt ist, festzustellen, ob das Werkzeug bezüglich des Werkzeugträgers eine Grenze erreicht, die einer maximal zugelassenen Bewegung entspricht.

13. Maschine nach einem der Ansprüche 9 bis 12, dadurch gekennzeichnet, daß einer der Hebel (9A) zwei Hebelhälften (19A, 19B), die in bezug aufeinander gleiten können und am Werkzeugträger (7) bzw. am Werkzeug (5A, 5B) angelenkt sind, Einrichtungen (21A, 21B) zum elastischen Anlegen der beiden Hebelhälften aneinander und Einrichtungen (22) zum Feststellen eines Abstandes zwischen den beiden Hebelhälften umfaßt, die dazu bestimmt sind, festzustellen, ob das Werkzeug bezüglich des Werkzeugträgers eine äußerste Bewegungsgrenze auf den Maschinenkörper zu erreicht.

14. Maschine nach einem der Ansprüche 1 bis 13, dadurch gekennzeichnet, daß sie ein Bodenwerkzeug (3) zur Beförderung der unter dem Maschinenkörper befindlichen Abfälle in einen Behälter (4) besitzt, wobei jedes Seitenwerkzeug vor dem Bodenwerkzeug angeordnet ist und eine längliche Form besitzt, die elastischen Verbindungseinrichtungen (9A, 9B, 12) so ausgebildet sind, daß das Werkzeug von selbst bezüglich des Maschinenkörpers schräg angeordnet ist und jeder Werkzeugträger in einer Querrichtung (6) zum Maschinenkörper translationsbeweglich ist.

15. Maschine nach einem der Ansprüche 1 bis 14, dadurch gekennzeichnet, daß sie zwei gleichartige Seitenwerkzeuge (5A, 5B) besitzt, und daß die beiden Werkzeugträger (7, 7′) in Translation auf Stangen (17A, 17B) geführt sind, die sich quer zum Maschinenkörper erstrecken und auf der sie in einander entgegengesetzter Ausrichtung angeordnet sind.

16. Maschine nach Anspruch 15, dadurch gekennzeichnet, daß die Einrichtungen zur elastischen Verbindung zwischen dem Werkzeugträger und dem Seitenwerkzeug zwei Hebel (9A, 9B) umfassen, die jeweils an einem ersten Ende (10A, 10B) am Werkzeugträger (7) und an einem zweiten Ende (11A, 11B) am Seitenwerkzeug angelenkt sind, und daß bei jedem Seitenwerkzeug ein nicht dehnbares, biegsames Verbindungsorgan (16) zwischen dem Maschinenkörper (2) und einem dieser Hebel (9B) angeordnet ist, um das Seitenwerkzeug eine Stellung einnehmen zu lassen, die bezüglich des Maschinenkörpers so transversal wie möglich ist, damit das zum Einfahren des Werkzeugs in den Maschinenkörper erforderliche Volumen auf ein Minimum reduziert wird.

17. Maschine nach einem der Ansprüche 1 bis 16, dadurch gekennzeichnet, daß jedes Seitenwerkzeug eine längliche Bürsteinheit bildet, die als Bürste einen Riemen (57) besitzt, der auf seinem Außenprofil mit Haaren (58) versehen ist, während sein Innenprofil so ausgebildet ist, daß es mit rotierenden Scheiben (58, 59, 60) zusammenwirken kann, wobei die Haare auf dem Riemen schräg implantiert sind.

18. Maschine nach Anspruch 17, dadurch gekennzeichnet, daß die Bürsteinheit einen länglichen Träger (61) besitzt, auf dem die Scheiben montiert sind, sowie einen Motor (62) zum Antrieb einer der Scheiben, der mit der angetriebenen Scheibe (58) durch eine Kreuzscheibenkupplung (63) und ein Untersetzungsgetriebe (64) verbunden ist.

19. Verfahren zur Reinigung einer Hindernisse aufweisenden Fläche, dadurch gekennzeichnet, daß man eine Reinigungsmaschine nach einem der Ansprüche 1 bis 18 verwendet, indem man sie auf dieser Fläche in einer Bewegungsbahn (35, 36, 37) bewegt, die ein Minimum an Richtungsänderungen aufweist.

20. Verfahren nach Anspruch 19, dadurch gekennzeichnet, daß die zu reinigende Fläche der Boden eines Fahrzeugs für den öffentlichen Verkehr (31, 32, 33) ist.

21. Verfahren nach Anspruch 20, dadurch gekennzeichnet, daß man die Maschine eine Bahn durchfahren läßt, die das Fahrzeug auf einer Seite von einem Ende zum anderen entlanggeht und dann auf der entgegengesetzten Seite in umgekehrter Richtung entlanggeht, wobei diese Bahn anschließend eine zentrale Strecke (37, 41, 42) besitzt, die in derselben Richtung wie die an der ersten Seite entlanglaufende Strecke (35) durchfahren wird, die verwendete Maschine Einrichtungen besitzt, die den Maschinenkörper automatisch dieser Bahn folgen lassen und diese Maschine eine Höhenabmessung besitzt, die es ihr gestattet, unter den Sitzen des Fahrzeugs hindurchzufahren, während die Amplitude der Änderungen ihrer Arbeitsbreite es ihr gestattet, den Boden des Fahrzeugs bei Durchfahren dieser Bahn zu reinigen.

## Claims

1. Machine for cleaning a surface with obstacles, having a body (2) equipped on at least one side with a lateral device (5A, 5B) and, for each lateral device (5A, 5B), means for moving a device carrier (7, 7′) with respect to the body, and means of resilient connection between the device carrier (7, 7′) and the lateral device (5A, 5B), to make the lateral device (5A, 5B) able to move resiliently with respect to the device carrier (7, 7′); characterised in that the said means for moving a device carrier (7, 7′) with respect to the body (2), and the said means of resilient connection (9A, 9B, 12) between the device carrier and the lateral device (5A, 5B), both form part of the means for adjusting automatically the working width of the machine in accordance with any obstacles (24, 25) which may be close to it, so that it can be moved on the said surface along a path (25; 35, 36, 37) involving a minimum of changes in direction, the said means of resilient connection between the device carrier and the lateral device providing a passive automatic adjustment level of the working width, the said means for moving a device carrier with respect to the body providing an active automatic adjustment level of the working width.

2. Machine according to Claim 1, characterised in that the said means for adjusting the working width automatically include in addition, for each lateral device:
- detection means (14) for detecting whether the device is, with respect to the device carrier, in an innermost limit position corresponding to a maximum permitted movement towards the body of the machine;
- action means, connected to the detection means (14), for acting, when the said innermost limit position is detected, on the said means for moving a device carrier with respect to the body, in order to bring the device carrier closer to the body by a predetermined distance.

3. Machine according to Claim 2, characterised in that the said means for automatically adjusting the working width also include, for each lateral device, second detection means (15) for detecting whether the device is, with respect to the device carrier, in an outermost limit position corresponding to a maximum permitted movement in the opposite direction to the body of the machine, the said action means also being connected to the said second detection means (15) and acting, when the outmost limit position is detected, on the means for moving the device carrier in order to move it away from the body by a predetermined distance.

4. Machine according to any one of Claims 1 to 3, characterised in that it includes means for causing the machine body to follow automatically, on the said surface, a cleaning path (35, 36, 37) predetermined in accordance with the position of the obstacles (45) and the possibilities for variations in the working width of the machine, so as to involve only a minimum of changes in direction.

5. Machine according to Claim 4, characterised in that the means for adjusting the working width automatically also include memorisation means for registering, for each lateral device, each position which the device carrier must adopt successively with respect to the body (2) as a function of the position of the machine body on the said predetermined path and means connected to the said means for causing the machine body to follow the path, to the said memorisation means and to the said means for moving the device carrier, so that they bring the device carrier into the position which it must adopt.

6. Device according to any one of Claims 1 to 5, characterised in that it includes safety means including:
- for each lateral device, obstruction detection means (22), for detecting if the device reaches, with respect to the device carrier, a maximum limit of movement towards the machine body;
- reflex reaction means, connected to each of the obstruction detection means, for acting when a said maximum limit is detected, on the one hand on means for stopping the movement of the machine body with respect to the surface to be cleaned, and on the other hand on the means for moving the device carrier concerned, so that they retract it to the maximum extent.

7. Machine according to Claim 6, characterised in that the said reflex reaction means also act, after a single maximum limit has been detected, on the means for stopping the movement of the machine body in order to re-enable the movement of the machine body when the said maximum limit of movement is no longer detected, and then on the means for moving the device carrier so that it will move out again.

8. Machine according to either one of Claims 6 or 7, characterised in that it includes two similar lateral devices (5A, 5B), respectively on each side of the machine body, and means for automatically moving the machine body (2), and in that the said reflex reaction means act, after a maximum limit has been detected for each lateral device, on the means for moving the machine body automatically in order to cause it to pivot.

9. Machine according to any one of Claims 1 to 8, characterised in that the said means of resilient connection between the device carrier and the lateral device include two levers (9A, 9B), each articulated at a first end (10A, 10B) on the device carrier and at a second end (11A, 11B) on the lateral device, the four articulation points (10A, 10B, 11A, 11B) forming the angles of a deformable quadrilateral such that, when the device is moved with respect to the device carrier, their relative angular orientation is modified at the same time as they are moved in translation with respect to each other.

10. Machine according to Claim 9, characterised in that the said quadrilateral has two opposite sides with similar lengths and two opposite sides with different lengths.

11. Machine according to either one of Claims 9 or 10, characterised in that a resilient connection (12) is disposed between the said levers, whilst two stops (13A, 13B) are provided to limit, on each side, the movements of the device with respect to the device carrier.

12. Machine according to any one of Claims 9 to 11, characterised in that it includes at least one contact detector actuated by one of the said levers, intended to detect whether the device reaches, with respect to the device carrier, a limit corresponding to a maximum permitted movement.

13. Machine according to any one of Claims 9 to 12, characterised in that one of the said levers (9A) has two half-levers (19A, 19B) adapted so as to slide with respect to each other, articulated respectively on the device carrier (7) and on the device (5A, 5B), means (21A, 21B) for applying the two half-levers elastically against each other, and means (22) for detecting a gap between the two half-levers, intended to detect whether the device reaches, with respect to the device carrier, a maximum limit of movement towards the machine body.

14. Machine according to any one of Claims 1 to 13, characterised in that it includes a bottom device (3) for directing any rubbish under the machine body into a container (4), each lateral device being disposed in front of the bottom device and having an oblong shape, the said elastic connection means (9A, 9B, 12) being adapted so that the said device is automatically disposed on a slant with respect to the machine body, each device carrier being movable in translation in a direction (6) transverse to the machine body.

15. Machine according to any one of Claims 1 to 14, characterised in that it includes two similar lateral devices (5A, 5B), respectively on each side of the machine body, and in that the two device carriers (7, 7′) are guided in translation on rods (17A, 17B) transverse to the machine body and on which they are disposed in reverse orientations.

16. Machine according to Claim 15, characterised in that the said means of resilient connection between the device carrier and the lateral device include two levers (9A, 9B) each articulated at a first end (10A, 10B) on the device carrier (7) and at a second end (11A, 11B) on the lateral device, and in that, for each lateral device, a flexible non-extensible connection is disposed between the machine body (2) and one of the said levers (9B), in order to cause the lateral device to adopt a position as transverse as possible with respect to the machine body, in order to minimise the volume needed for the retraction of the device into the machine body.

17. Machine according to any one of Claims 1 to 16, characterised in that each lateral device forms an oblong brushing assembly having as a brush a belt (57) equipped with bristles (58) on its external profile while its internal profile is adapted for cooperating with rotary pulleys (58, 59, 60), the said bristles being implanted obliquely on the belt.

18. Machine according to Claim 17, characterised in that the said brushing assembly includes an oblong support (61) on which the said pulleys are mounted, and a motor (62) for driving one of the pulleys, the said motor being connected to the driving pulley (58) by an Oldham coupling (63) and a gearbox (64).

19. Method for cleaning a surface with obstacles, characterised in that a cleaning machine according to any one of Claims 1 to 18 is used, moving it over the said surface on a path (35, 36, 37) involving a minimum of changes in direction.

20. Method according to Claim 19, characterised in that the said surface which is being cleaned is the floor of a public transport vehicle (31, 32, 33).

21. Method according to Claim 20, characterised in that the said machine is made to follow a path running along the vehicle, on one side from one end to the other and then moving along the opposite side in the opposite direction, the said path then including a central section (37, 41, 42) covered in the same direction as the section (35) along the first side, the machine used having means for causing the machine body to follow the said path automatically, this machine having a height which enables it to pass under the seat of the vehicle whilst the amplitude of the variations in its working width enables it to clean the floor of the vehicle while following the said route.
